# EUROPÄISCHE PATENTSCHRIFT

(11) **EP 3 302 923 B1**
(45) Veröffentlichungstag und Bekanntmachung des Hinweises auf die Patenterteilung: **04.10.2023**
(21) Anmeldenummer: 16722176.1
(22) Anmeldetag: 10.05.2016
(51) Int. Cl.: B29C 48/27, B29C 48/25, B29B 7/60, B29C 31/02, B29C 31/06, B29C 31/10, B29C 48/00, B29C 48/10, B29C 48/285, B29C 48/92, B29C 48/08

(54) **VERFAHREN FÜR DIE DURCHFÜHRUNG EINES MATERIALWECHSELS BEI EINER EXTRUSIONSVORRICHTUNG**
METHOD FOR CHANGING THE MATERIAL IN AN EXTRUSION DEVICE
PROCÉDÉ POUR EFFECTUER UN CHANGEMENT DE MATIÈRE DANS UN DISPOSITIF D'EXTRUSION

(30) Priorität: 08.06.2015 DE 102015108979
(43) Veröffentlichungstag der Anmeldung: 11.04.2018
(73) Patentinhaber: Windmöller & Hölscher KG, 49525 Lengerich (DE)
(72) Erfinder: BACKMANN, Martin, 49525 Lengerich (DE)
(86) Internationale Anmeldenummer: PCT/EP2016/060449
(87) Internationale Veröffentlichungsnummer: WO 2016/198225

(56) Entgegenhaltungen:
- DE-A1-102013 100 812
- DE-A1-102013 100 866
- JP-A- H0 890 637
- HERRMANN H: "AUF DEM WEG ZUR FLEXIBLEN UND INTELLIGENTEN AUFBEREITUNGSANLAGE", KUNSTSTOFFE, CARL HANSER VERLAG, MUNCHEN, DE, Bd. 78, Nr. 10, 1. Oktober 1988 (1988-10-01), Seiten 876-884, XP000052617, ISSN: 0023-5563

## Beschreibung

Die vorliegende Erfindung betrifft ein Verfahren für die Durchführung eines Materialwechsels bei einer Extrusionsvorrichtung.

Es ist bekannt, dass bei Extrusionsvorrichtungen für die Herstellung von Kunststofffolien ein Materialwechsel durchgeführt werden muss, um zwischen unterschiedlichen Produkten in der Produktion wechseln zu können. Ein Materialwechsel bezieht sich dabei auf einen Übergang von einer Einsatzrezeptur auf eine Folgerezeptur. Jede Rezeptur weist unterschiedlichste Kombinationen von Einsatzmaterialien bzw. Folgematerialien auf, welche dementsprechend beim Übergang in Form eines Materialwechsels ausgetauscht werden müssen. Bei einer Extrusionsvorrichtung ist üblicherweise ein Extruder mit einer Mehrzahl von Vorlagevorrichtungen vorgesehen, aus welchen das Einsatzmaterial entfernt und durch Folgematerial ersetzt werden muss.

Nachteilhaft bei den bekannten Lösungen ist es, dass der Materialwechsel manuell üblicherweise der Reihe nach durchgeführt wird. Dies führt dazu, dass durch die manuelle Ausführung dieses Materialwechsels auf Basis der Erfahrungswerte eines Maschinenbedieners die Wechselstrategie bzw. die Wechselreihenfolge der einzelnen Einsatzmaterialien bzw. Folgematerialien frei wählbar ist. Dies kann dazu führen, dass die Produktionsstabilität im Laufe des Materialwechsels variiert. Dies ist insbesondere bei unerfahrenen Maschinenbedienern nur dann möglich, wenn eine zweite Person die Produktionsstabilität überwacht und anhand von einer Veränderung der Produktionsparameter auf eine geänderte Produktionsstabilität reagiert. Dies führt jedoch zu einem hohen personellen Aufwand und gleichzeitig zu einem erhöhten Zeitaufwand, da für eine solche Reaktion in Form von geänderten Produktionsparametern eine entsprechende Reaktionszeit beim Materialwechsel eingeplant werden muss.

Die Schrift D1 DE 10 2013 100866 A1 offenbart ein Verfahren zur Durchführung eines Materialwechsels einer Extrusionsvorrichtung, die zwei Vorlagevorrichtung für die Vorlage von Einsatzmaterial für einen Extruder aufweist.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise den Materialwechsel zu verbessern bzw. sicherer zu machen.

Voranstehende Aufgabe wird gelöst durch ein Verfahren mit den Merkmalen des Anspruchs 1. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren gemäß Hauptanspruch beschrieben sind, selbstverständlich auch im Zusammenhang mit dem erfindungsgemäßen Verfahren gemäß der Unteransprüche und jeweils umgekehrt, so dass bezüglich der Offenbarung zu den einzelnen Erfindungsaspekten stets wechselseitig Bezug genommen wird bzw. werden kann.

Ein erfindungsgemäßes Verfahren dient der Durchführung eines Materialwechsels bei einer Extrusionsvorrichtung mit zumindest zwei Vorlagevorrichtungen. Diese Vorlagevorrichtungen dienen der Vorlage von Einsatzmaterial für einen Extruder. Ein solches Verfahren weist die folgenden Schritte auf:
- Erkennen einer Wechselanforderung für einen Materialwechsel bei einer Extrusionsvorrichtung,
- Vorbestimmen einer Produktionsstabilität für einen Zeitpunkt nach dem Materialwechsel wenigstens einer Vorlagevorrichtung,
- Vergleich der vorbestimmten Produktionsstabilität mit einem Stabilitätsgrenzwert,
- Durchführen des Materialwechsels für wenigstens eine Vorlagevorrichtung in Abhängigkeit von dem Vergleichsergebnis.

Bei einem erfindungsgemäßen Verfahren erfolgt also eine Vorhersage in Form einer Vorbestimmung einer Produktionsstabilität. Unter einer Produktionsstabilität ist dabei jegliche Form eines Faktors oder einer Kombination unterschiedlicher Faktoren zu verstehen, welche Einfluss auf den stabilen Fortlauf der Produktion haben. Eine solche Produktionsstabilität kann zum Beispiel zusammenhängen oder abhängen von einer Blasenstabilität bei der Herstellung einer Kunststoffblase bei einer Blasfolienproduktion. Auch andere Produktionsstabilitätsfaktoren, wie zum Beispiel der Temperaturverlauf in einem Extruder, die Korrelation zwischen Temperaturen innerhalb der Anlage und entsprechenden Schmelztemperaturen einzelner Materialien oder Ähnliches können im Rahmen der vorliegenden Erfindung als Produktionsstabilität bezeichnet werden. Im Prinzip ist jeder Parameter, welcher eine Korrelation zwischen dem Einsatzmaterial bzw. dem Folgematerial einerseits und einem Betriebsparameter der Extrusionsvorrichtung andererseits aufweist, als Produktionsstabilitätsparameter zu verstehen.

Erfindungsgemäß wird nun diese Produktionsstabilität vorbestimmt für einen Zeitpunkt nach dem Materialwechsel wenigstens einer Vorlagevorrichtung. Bei bekannten Extrusionsvorrichtungen sind üblicherweise für jeden Extruder zwei oder mehr Vorlagevorrichtungen vorgesehen. Für die Herstellung einer mehrschichtigen Kunststofffolie ist üblicherweise eine Extrusionsvorrichtung für jede Kunststoffschicht der Folie vorgesehen, so dass eine Vielzahl von Extrusionsvorrichtungen mit einer entsprechenden Vielzahl von Vorlagevorrichtungen eine hohe Komplexität an unterschiedlichen Einsatzmaterialkombinationen bzw. Folgematerialkombinationen zur Verfügung steht. Dabei ist zu beachten, dass zumindest bei dem Fahren der Einsatzrezeptur und beim Fahren einer fertig umgestellten Folgerezeptur von einer stabilen Zusammensetzung bezogen auf die Produktionsstabilität auszugehen ist. Der Übergang zwischen der Einsatzrezeptur und der Folgerezeptur, welcher auch als Zwischenproduktionsstatus bezeichnet werden kann, kann jedoch in unterschiedlichster Weise vorgenommen werden. So ist grundsätzlich die freie Entscheidung gegeben, welches Einsatzmaterial in welcher Vorlagevorrichtung als Erstes bzw. als Letztes gewechselt wird. Diese Reihenfolge ist jedoch für den Verlauf der Produktionsstabilität zwischen der Einsatzrezeptur und der Folgerezeptur von entscheidender Bedeutung.

Erfindungsgemäß wird nun für jeden einzelnen Wechselschritt, also insbesondere für wenigstens eine Vorlagevorrichtung, eine Vorbestimmung einer Produktionsstabilität für den Zeitpunkt nach der Durchführung dieses Materialwechsels durchgeführt. Mit anderen Worten wird überprüft, wie sich der folgende Materialwechsel wenigstens einer Vorlagevorrichtung auf den jeweiligen Produktionsstabilitätsfaktor auswirken wird. So kann zum Beispiel durch die Änderung von einem Einsatzmaterial auf ein Folgematerial in einer spezifischen Vorlagevorrichtung eine Beeinträchtigung der Produktionsstabilität in Form eines Absinkens des entsprechenden Parameters vorherbestimmt werden. Nun ist anschließend erfindungsgemäß zu klären, ob diese Einschränkung und Reduktion der Produktionsstabilität sich in einem akzeptierbaren Rahmen befindet oder nicht. Dies wird in dem Vergleichsschritt durchgeführt, bei welchem die vorbestimmte Produktionsstabilität mit einem Stabilitätsgrenzwert verglichen wird.

Der voranstehend beschriebene Stabilitätsgrenzwert kann dabei in unterschiedlichster Weise vorgegeben werden. Insbesondere handelt es sich beim Stabilitätsgrenzwert um eine freie Untergrenze, welche als Untergrenze für den jeweiligen Produktionsstabilitätsparameter oder die Kombination dieser Parameter zu verstehen ist. Dabei kann diese Stabilitätsgrenze unabhängig davon sein, welche Produktionsstabilität in der Einsatzrezeptur bzw. in der Folgerezeptur erreicht werden kann. Jedoch ist es auch denkbar, dass ein solcher Stabilitätsgrenzwert die Produktionsstabilität der niedrigeren der beiden Werte der Einsatzrezeptur und der Folgerezeptur darstellt. Ist also davon auszugehen, dass durch die Vorherbestimmung von der Einsatzrezeptur auf die Folgerezeptur mit einer Reduktion der Produktionsstabilität zu rechnen ist, so kann durch den Stabilitätsgrenzwert die Produktionsstabilität der Folgerezeptur gesetzt werden. Dies führt dazu, dass ein unerwünschtes Absinken unter die Zielproduktionsstabilität der Folgerezeptur während des Übergangs zwischen den beiden Rezepturen vermieden wird. Mit anderen Worten kann der Stabilitätsgrenzwert sowohl mit direktem Bezug auf die Produktionsstabilität der beiden eingesetzten Rezepturen oder unabhängig davon gewählt werden.

Der letzte Schritt eines erfindungsgemäßen Verfahrens befasst sich damit, dass die Durchführung des Materialwechsels für die wenigstens eine Vorlagevorrichtung in Abhängigkeit von dem Vergleichsergebnis durchgeführt wird. So ist sichergestellt, dass insbesondere nur dann der Materialwechsel durchgeführt wird, wenn die vorbestimmte Produktionsstabilität größer oder gleich dem vorgegebenen Stabilitätsgrenzwert ist. Damit wird verhindert, dass ein unerwünschtes Absinken der Produktionsstabilität zu einem Abriss in der Produktion der Kunststofffolie führen könnte. Auch andere Defekte oder Nachteile innerhalb des Produktionsprozesses, welche mit einer unerwünschten Reduktion der Produktionsstabilität einhergehen, können auf diese Weise wirkungsvoll vermieden werden.

Neben der grundsätzlichen Verbesserung der Sicherheit durch ein erfindungsgemäßes Verfahren wird gleichzeitig auch eine Reduktion hinsichtlich der notwendigen Anzahl der Maschinenbediener erreicht. So ist nunmehr möglich, dass ein einziger Maschinenbediener den kompletten Materialwechsel durchführt, da durch das erfindungsgemäße Verfahren sichergestellt ist, dass keinerlei Reaktion auf eine unerwünscht niedrige Produktionsstabilität durch Anpassung von Betriebsparametern mehr notwendig ist. Dies führt neben der Zeitersparnis und der erhöhten Sicherheit zu einer Reduktion der Personalkosten im Betrieb einer entsprechend ausgestatteten Extrusionsvorrichtung.

Es kann von Vorteil sein, wenn bei einem erfindungsgemäßen Verfahren für den Schritt der Vorbestimmung der Produktionsstabilität der Einfluss auf die Produktionsstabilität für das Einsatzmaterial und ein Folgematerial aus einer Datenbank ausgelesen werden. So ist es denkbar, dass in einer Kontrollvorrichtung oder aber in der Extrusionsvorrichtung selbst eine entsprechende Datenbank zur Verfügung gestellt ist, welche Materialdaten des Einsatzmaterials und des Folgematerials aufweist. Diese Materialdaten können darüber hinaus mit entsprechenden prozentualen Anteilsfaktoren korreliert sein, so dass in der Datenbank eine Aussage enthalten ist, welcher prozentuale Anteil an einer Einsatzrezeptur bzw. Folgerezeptur das jeweilige Material mit welchem Einfluss auf die Produktionsstabilität korreliert. Somit ist aus der Datenbank auslesbar, wie das Entfernen eines Einsatzmaterials bzw. das Hinzufügen eines entsprechenden Folgematerials sich hinsichtlich einer Auswirkung auf die Produktionsstabilität verhält. Dies ist eine besonders einfache und kostengünstige Lösung, um ein erfindungsgemäßes Verfahren zur Verfügung zu stellen. Dabei kann die Produktionsstabilität mit einer entsprechenden Datenbank in Form einer zweidimensionalen Struktur versehen sein. Selbstverständlich sind auch deutlich komplexere Datenbanken, welche insbesondere die Korrelation von unterschiedlichen mehrkomponentigen Vorlagevorrichtungen berücksichtigen, im Rahmen der vorliegenden Erfindung denkbar. So ist insbesondere auch der Einfluss einzelner Materialien auf andere Materialien innerhalb einer Schicht in einer solchen Datenbank berücksichtigbar.

Ein Vorteil ist es darüber hinaus, wenn bei einem erfindungsgemäßen Verfahren für den Schritt der Vorbestimmung der Produktionsstabilität die Korrelation der Vorlagevorrichtung mit einer zugehörigen Schicht der zu produzierenden Folie in Betracht gezogen wird. Das bedeutet, dass die zugehörige Schicht einer Vorlagevorrichtung bzw. einer Vielzahl von Vorlagevorrichtungen des entsprechenden Extruders bzw. der Extrusionsvorrichtung, mit einer zugehörigen Schicht in der Kunststofffolie korreliert. So kann eine in der Mitte der Kunststofffolie gelagerte Schicht andere Produktionsstabilitätsschwankungen erlauben, als dies bei einer Randschicht der Kunststofffolie der Fall ist. Durch die Berücksichtigung der Auswirkung des Materialwechsels der entsprechenden Vorlagevorrichtung auf die entsprechende Schicht der Kunststofffolie kann noch genauer und noch effizienter eine Vorbestimmung der Produktionsstabilität in der gesamten Produktion und damit eine weitere Erhöhung der Sicherheit beim Materialwechsel erzielt wird. Dabei werden nicht nur die Position und der Ort der jeweiligen Schicht berücksichtigt, sondern vorzugsweise darüber hinaus auch die zugehörige Förderschicht der jeweiligen Vorlagevorrichtung bzw. die unterschiedlichen Schichtdicken, welche die unterschiedlichen Schichten der zu produzierenden Folie aufweisen können.

Ein weiterer Vorteil ist es, wenn bei einem erfindungsgemäßen Verfahren die Produktionsstabilität für eine mehrschichtige Folie simuliert wird, insbesondere zumindest zwei, vorzugsweise alle unterschiedlichen Reihenfolgen der Vorlagevorrichtung bei der Durchführung des Materialwechsels hinsichtlich der zu erwartenden Produktionsstabilität simuliert werden. Eine Simulation wird dabei vorzugsweise für die gesamte mehrschichtige Folie durchgeführt, so dass vorzugsweise zwei oder sogar alle unterschiedlichen Reihenfolgen simuliert werden. Insbesondere wird dabei ein möglicher Pfad des Materialwechsels vorgegeben und durchsimuliert, und anschließend oder bereits im Verlauf der Simulation eine Bewertung dieses Pfades durchgeführt. So ist es beispielsweise denkbar, dass rein zufällig ein entsprechender Pfad zwischen den einzelnen Vorlagevorrichtungen, also eine Wechselstrategie nach der andren, ausprobiert wird, bis für einen Schritt dieses Materialwechsels eine zu geringe Produktionsstabilität vorbestimmt wird. An dieser Stelle wird der Pfad abgebrochen und eine Alternative gewählt. Dies ist eine Möglichkeit in besonders kostengünstiger und einfacher Weise auf zufälliger Basis durch die Simulation einen möglichen erlaubten Pfad für den Materialwechsel und damit eine optimierte Wechselstrategie zur Verfügung zu stellen. Auch ist es möglich, dass auf Basis einer Simulation aller möglichen Reihenfolgen und aller möglichen Korrelationen der Wechselstrategie eine optimierte und damit mit Bezug auf alle möglichen Reihenfolgen optimale Wechselstrategie durch die Simulation berechnet bzw. zur Verfügung gestellt wird. Insbesondere wird auf diese Weise vermieden, dass durch ungeschickte Wechselstrategien die gesamte Situation der Extrusionsvorrichtung sich in eine Sackgasse bewegt, in welcher durch keinen weiteren Wechsel zwischen einem Einsatzmaterial und einem Folgematerial die gewünschte Produktionsstabilität über der Stabilitätsgrenze gehalten werden kann.

Vorteilhaft ist es weiter, wenn bei einem erfindungsgemäßen Verfahren die Schritte der Vorbestimmung und des Vergleichs für alle Vorlagevorrichtungen durchgeführt werden und anschließend eine Reihenfolge der Vorlagevorrichtungen für die Durchführung des Materialwechsels vorgegeben wird. Das bedeutet, dass der komplette Wechselpfad und damit die komplette Wechselstrategie für sämtliche Vorlagevorrichtungen im Rahmen der vorliegenden Erfindung vorgegeben werden. Insbesondere erfolgt diese Vorgabe für die Durchführung des Materialwechsels in visueller Weise, so dass zum Beispiel in Form einer Anzeigevorrichtung eine entsprechende Führung des Maschinenbedieners zur Verfügung gestellt wird. Selbstverständlich kann dies auch eine parallele oder teilparallele Abarbeitung im Rahmen des Materialwechsels beinhalten, so dass zwei oder mehr Vorlagevorrichtungen zeitlich parallel bzw. zeitlich überlappend und damit gleichzeitig hinsichtlich des Materialwechsels bearbeitet werden können. Dies ist eine besonders einfache und kostengünstige Lösung, die Gesamtdauer des Materialwechsels noch weiter zu reduzieren und trotzdem die hohe Sicherheit durch ein erfindungsgemäßes Verfahren zu gewährleisten.

Erfindungsgemäß ist es ebenfalls, wenn bei einem erfindungsgemäßen Verfahren der Schritt des Durchführens des Materialwechsels ausgeführt wird, solange wenigstens eine stabile und/oder stabilisierende Schicht einer Folie die Vorbestimmung einer Produktionsstabilität über dem Stabilitätsgrenzwert ergibt. Mit anderen Worten heißt dies, dass immer zumindest eine stabile oder stabilisierende Schicht produziert wird. Dies führt dazu, dass im Wesentlichen alle anderen Schichten der Folie frei von jeglichem Einfluss auf die Produktionsstabilität hinsichtlich eines Übergangs für den Materialwechsel bearbeitet werden können, da die stabile bzw. stabilisierende Schicht die Produktionsstabilität für die gesamte Kunststofffolie über der Stabilitätsgrenze hält. Eine stabile Schicht ist in sich selbst so stabil, dass unabhängig von Änderungen in den benachbarten Schichten die Produktionsstabilität ausreichend beibehalten wird. Eine stabilisierende Schicht weist zwar nicht alleine die gewünschte Stabilität auf, bringt jedoch im Zusammenspiel mit den weiter vorhandenen in sich jedoch instabilen Schichten eine ausreichende Produktionsstabilität mit sich.

Ein weiterer Vorteil ist es, wenn bei einem erfindungsgemäßen Verfahren während und/oder nach der Durchführung eines Materialwechsels für wenigstens eine Vorlagevorrichtung die reale Produktionsstabilität überwacht und aufgezeichnet wird. Dabei ist der Schritt des Aufzeichnens der Produktionsstabilität vorzugsweise optional. Selbstverständlich ist es denkbar, dass bei dieser Durchführung der Überwachung sozusagen eine Online-Rückkopplung besteht, so dass bei einer Abweichung von der Vorbestimmung eine entsprechende Warnung ausgegeben werden kann. Dies erlaubt es, darüber hinaus eine Rückkopplung mit einer Datenbank zur Verfügung zu stellen, so dass im Wesentlichen eine selbstlernende Datenbank zur Verfügung gestellt wird. Letztendlich ist auf diese Weise auch eine Überwachung möglich, um bei Fehlern oder bei Fehlbedienungen durch das Maschinenbedienpersonal eine entsprechende Warnung ausgeben zu können.

Ebenfalls vorteilhaft kann es sein, wenn bei einem erfindungsgemäßen Verfahren die Schritte der Vorbestimmung und des Vergleichs für einen manuellen Vorschlag einer Reihenfolge durchgeführt werden. Unter einem manuellen Vorschlag ist dabei insbesondere die Eingabe des Bedienpersonals zu verstehen. So kann beispielsweise ein Maschinenbediener einen entsprechenden eigenen Vorschlag für eine Wechselstrategie eingeben, welcher anschließend hinsichtlich des Einflusses und des Verlaufs der Produktionsstabilität durch die Vorbestimmung im Rahmen des erfindungsgemäßen Verfahrens überprüft wird. Diese Eingabe und Überprüfung kann zum Beispiel bei einem Terminal erfolgen, welches als Teil der Maschinensteuerung vorgesehen ist. Jedoch sind auch implizite Handlungen denkbar als Eingabe, so dass beispielsweise der Beginn eines Materialwechsels bei einer Vorlagevorrichtung als ein Schritt einer Wechselstrategie gewertet wird, welcher dementsprechend die Schritte der Vorbestimmung und des Vergleichs auslöst. Dabei ist sozusagen eine implizite Überwachung gegeben, so dass bei einer fehlerhaften Reihenfolge bzw. bei einem Materialwechsel, welcher zu geringer Produktionsstabilität führen würde, ein entsprechendes Warnsignal an den Maschinenbediener ausgegeben wird.

Weiter von Vorteil ist es, wenn bei einem erfindungsgemäßen Verfahren in Abhängigkeit von dem Vergleichsergebnis während der Durchführung des Materialwechsels für wenigstens eine Vorlagevorrichtung zumindest ein Produktionsparameter der zugehörigen Extruder angepasst wird, insbesondere wenigstens einer der folgenden:
- Temperatur der Extruder
- Foliendicke
- Geschwindigkeit der Produktion
- Extruderausstoß
- Aufblasverhältnis

Bei der voranstehenden Aufzählung handelt es sich um eine nicht abschließende Liste. Durch die Anpassung der Steuerung oder Regelung der Extrusionsvorrichtung wird eine Einwirkung auf zu erwartende zu niedrige Produktionsstabilität möglich. Dies kann darüber hinaus dazu führen, dass auch geringe Produktionsstabilitäten zugelassen werden, da durch eine entsprechende Einwirkung in automatisierter Weise ein Absinken der Produktionsstabilität so vermieden wird, dass entsprechend eine Betriebsentgegenwirkung stattfinden kann. Damit wird die Freiheit bei der Durchführung eines Materialwechsels noch größer, so dass insbesondere andere Priorisierungsmerkmale verwendet werden können, um entsprechend aus anderer Sicht verbesserte Wechselstrategien zur Verfügung stellen zu können. Solche veränderten Wechselstrategien beziehen sich zum Beispiel neben der Produktionsstabilität auf die Dauer der Spülzeit einzelner Materialien und/oder die Kosten für das Material für den Einsatz derartiger Materialien. So ist es nun denkbar, dass zum Beispiel ein Material mit sehr langer Durchspülzeit in einer Extrusionsvorrichtung zuerst gewechselt wird, obwohl eine Vorbestimmung eine deutlich verringerte Produktionsstabilität vorhergibt. Durch das Einwirken auf Produktionsparameter kann somit aus Sicht der Spülzeit eine verbesserte Wechselstrategie erreicht werden, weil durch eine entsprechende Einwirkung auf Betriebsparameter auf die Reduktion der Produktionsstabilität reagiert wird. Gleiches gilt auch für eine entsprechende Reduktion der Gesamtkosten, wenn besonders teuere Einsatzmaterialien sehr früh aus der Einsatzrezeptur herausgefahren werden und im Rahmen des Materialwechsels zuerst bearbeitet werden.

Vorteilhaft ist es weiter, wenn bei einem erfindungsgemäßen Verfahren zusätzlich für jedes zu wechselnde Einsatzmaterial eine Spülzeit bestimmt wird und bei der Auswahl der Reihenfolge der Vorlagevorrichtung berücksichtigt wird. Neben der Spülzeit ist es auch möglich, wie im voranstehenden Absatz erläutert, den Materialpreis, eine Temperaturstrategie oder eine Produktionsstabilität an sich als Priorität vorzugeben. Diese Vorgabe der Priorisierung, also auf welchen Parameter bei der Wechselstrategie am meisten Wert gelegt werden soll, kann insbesondere in manueller Weise eingegeben werden. Insbesondere ist auch eine Korrelation unterschiedlicher Prioritäten denkbar, so dass zum Beispiel die Produktionsstabilität zusätzlich zum Materialpreis und der Spülzeit Beachtung finden kann. Unter der Begrifflichkeit einer Temperaturstrategie ist zu verstehen, dass insbesondere bei einer Reduktion der Extrudertemperatur zu beachten ist, dass das Abkühlen der Extrudertemperatur eine gewisse Zeit in Anspruch nimmt. Diese ist nur schwer zu beschleunigen, da das Temperaturmanagement an einer Extrusionsvorrichtung sehr komplex ist. So kann über dem gesamten Verfahren zusätzlich diese Temperaturstrategie aufgelegt werden, um sicherzustellen, dass möglichst zum idealen Zeitpunkt zu Beginn der Produktion mit der Folgerezeptur der Extruder auch die richtige Temperatur aufweist.

Erfindungsgemäß ist es ebenfalls, wenn bei einem erfindungsgemäßen Verfahren für den gesamten Materialwechsel für alle Vorlagevorrichtungen der Gradient der Produktionsstabilität vorbestimmt und für die Durchführung des Materialwechsels berücksichtigt wird. Unter dem Gradienten ist dabei die Geschwindigkeit der Veränderung der Produktionsstabilität zu verstehen. Insbesondere wird dabei ein Wechselpfad gewählt, welcher mithilfe dieser Wechselstrategie zu einem besonders kontinuierlichen bzw. besonders flachen Gradienten führt. Große Sprünge, insbesondere lokale Minima sind auf jeden Fall zu vermeiden. Eine lineare Änderung mit entsprechend konstanten Gradienten ist dementsprechend erfindungsgemäß bevorzugt bei der Auswahl der zugehörigen Wechselstrategie.

Vorteilhaft ist es weiter, wenn bei einem erfindungsgemäßen Verfahren die Schritte der Vorbestimmung und des Vergleichs während der Durchführung des Materialwechsels wiederholt, insbesondere kontinuierlich ausgeführt werden. Diese Ausführungsform eines erfindungsgemäßen Verfahrens kann auch als Online-Überwachung bezeichnet werden, so dass beispielsweise nach jeder bzw. für jede Vorlagevorrichtung das Verfahren erneut durchgeführt wird. Somit ist auch eine Anpassung der Wechselstrategie möglich, wenn zum Beispiel im Rahmen des Materialwechsels der Nutzer in Form des Maschinenbedienpersonals abweichend von der Wechselstrategie handelt und andere Vorlagevorrichtungen im Materialwechsel vorzieht.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und der Beschreibung erwähnten Merkmale jeweils einzeln für sich oder in beliebiger Kombination erfindungswesentlich sein. Es zeigen schematisch:
- Fig. 1: eine erste Ausführungsform einer erfindungsgemäßen Extrusionsvorrichtung im Betriebszustand,
- Fig. 2: die Ausführungsform der Fig. 1 während einem Absenken der Füllstände,
- Fig. 3: die Ausführungsform der Fig. 1 und 2 mit einem Füllstand auf Wechselfüllstandsniveau,
- Fig. 4: die Ausführungsformen der Fig. 1 bis 3 mit einem schwankenden Füllstand, welcher auf Wechselfüllstandsniveau gehalten wird,
- Fig. 5: die Ausführungsform der Fig. 1 bis 4 während einer Reinigungssituation,
- Fig. 6: die Ausführungsform der Fig. 1 bis 5 während des Nachfüllens mit einem Folgematerial,
- Fig. 7: eine Möglichkeit eines Verlaufs der Produktionsstabilität,
- Fig. 8: eine weitere Möglichkeit eines Verlaufs einer Produktionsstabilität,
- Fig. 9: eine weitere Möglichkeit eines Verlaufs einer Produktionsstabilität und
- Fig. 10: eine alternative Ausführungsform einer Extrusionsvorrichtung.

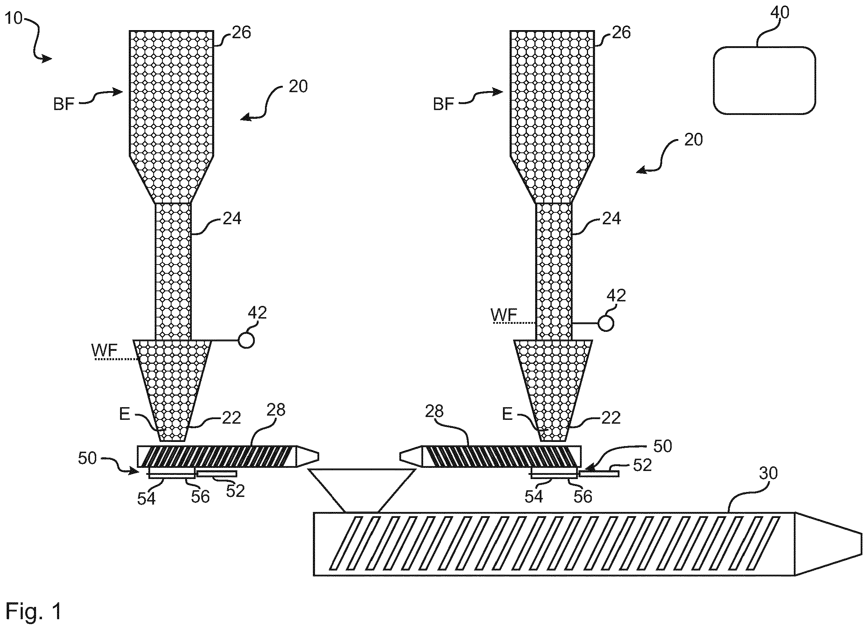

In Fig. 1 bis 6 ist schematisch eine Extrusionsvorrichtung 10 dargestellt, welche mit zwei Vorlagevorrichtungen 20 ausgestattet ist. Jede dieser Vorlagevorrichtungen 20 ist mit einem Vorlagebehälter 26, einem Fallrohr 24 und einem Wägetrichter 22 ausgestattet. Fig. 1 zeigt die Betriebssituation, wobei jede Vorlagevorrichtung 20 bis zu einem vollen Betriebsfüllstand BF mit einem Einsatzmaterial E befüllt ist. In diesem Zustand wird über Dosierschnecken 28 das jeweilige Einsatzmaterial E einem Extruder 30 zugeführt und von dort für die Produktion der Kunststofffolie verwendet. Ein erfindungsgemäßes Verfahren wird dabei in einer zugehörigen Kontrollvorrichtung 40 ausgeführt.

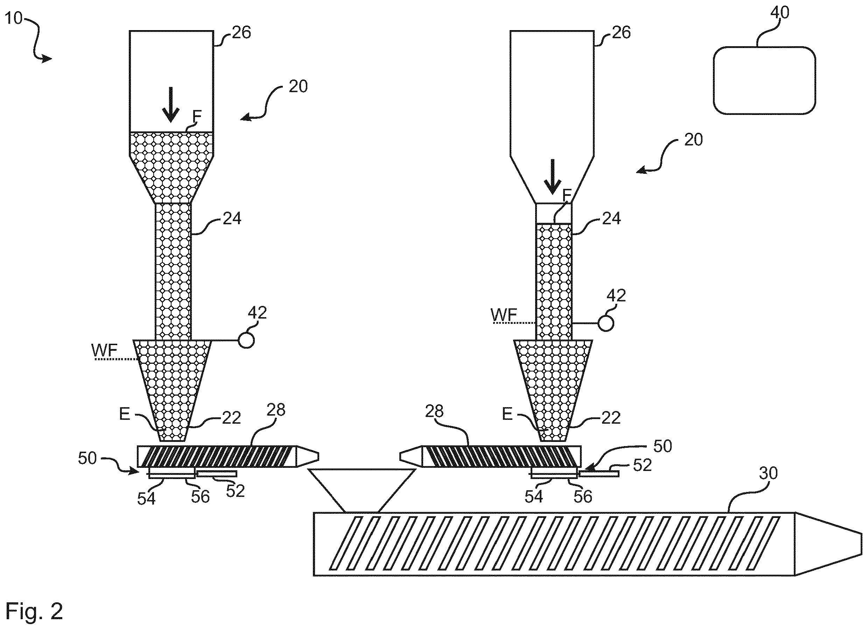

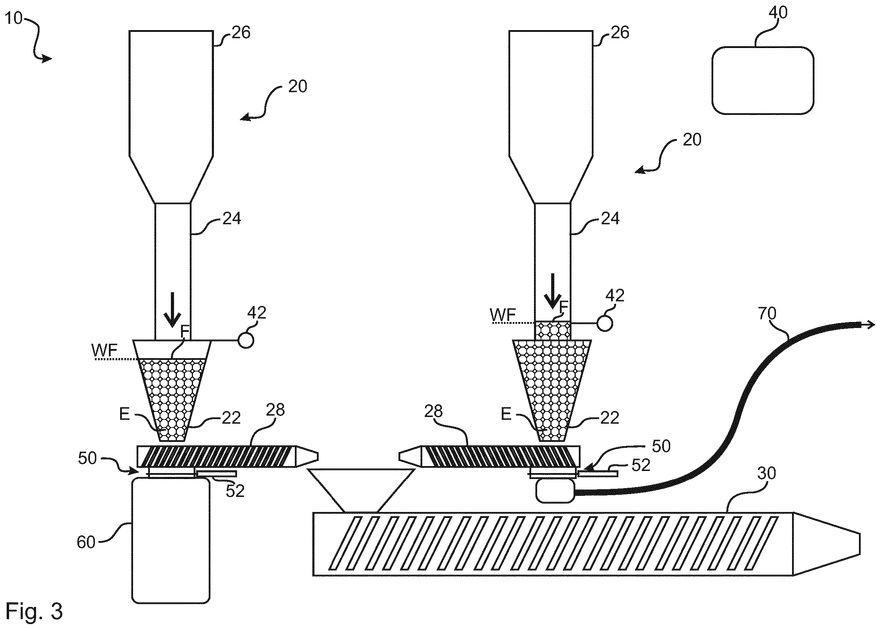

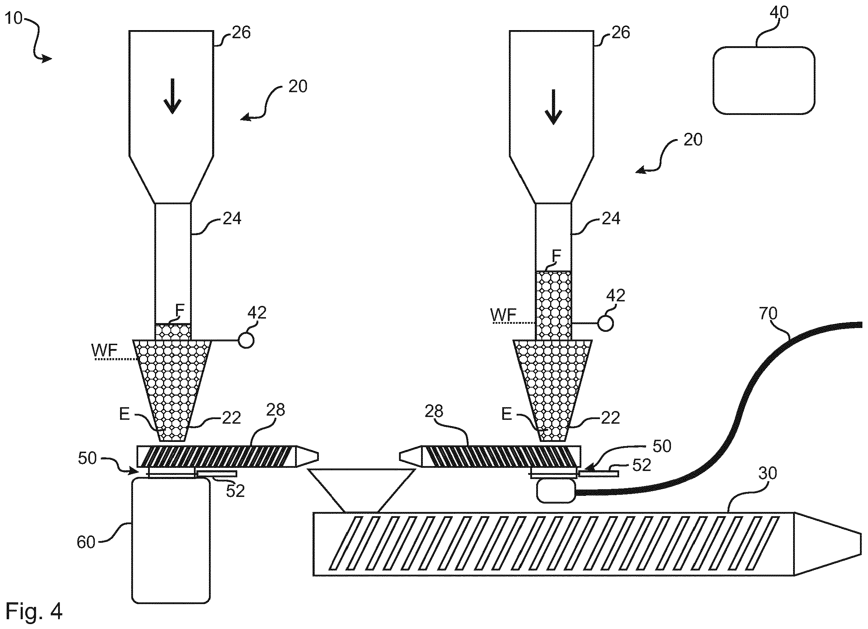

Als Vorbereitung auf einen Materialwechsel zeigt Fig. 2, wie ein Absenken der Füllstände F der Einsatzmaterialien E erfolgt. Durch weitere Produktion ohne Nachfüllen in die Vorlagevorrichtungen 20 sinkt nun der Füllstand F ab, bis er einen Wechselfüllstand WF gemäß der Fig. 3 erreicht. Um diesen Wechselfüllstand WF nicht zu unterschreiten, sind entsprechende Füllstandssensoren 42 vorgesehen, so dass zum Zeitpunkt gemäß Fig. 3 ein kurzes Nachfüllen in Form eines Nachfüllschubes erfolgt, so dass im Wesentlichen ein schwankendes Halten des Füllstandes F auf dem Stand gemäß der Fig. 3 und 4 erfolgt.

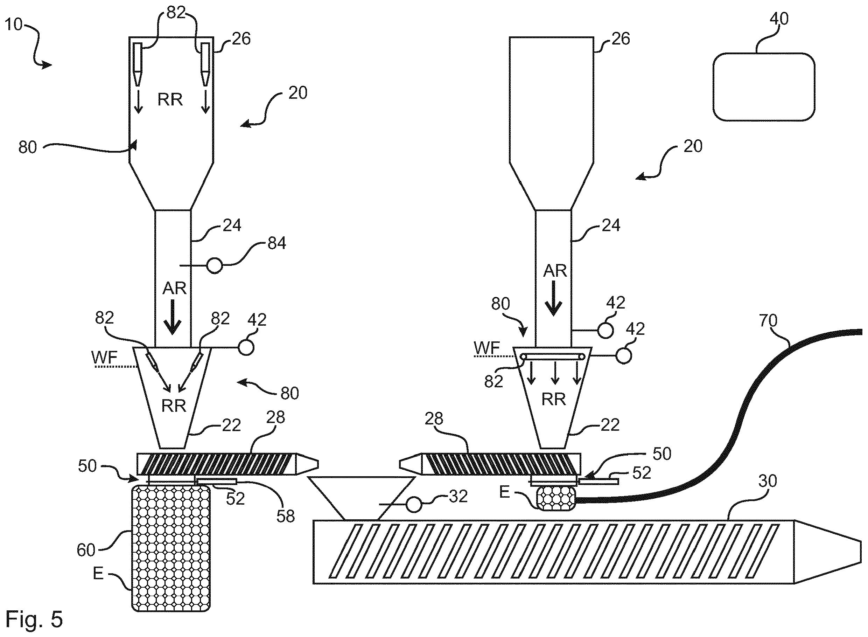

Fig. 5 zeigt, wie zum Zeitpunkt des tatsächlichen Materialwechsels das Einsatzmaterial E aus den Vorlagevorrichtungen 20 komplett nach unten abgelassen werden kann. Das Auffangen kann sowohl in einem Ablassbehälter 60 als auch mithilfe einer Rückführvorrichtung 70 erfolgen. Für das Ablassen sind hier Ablassöffnungen 50 vorgesehen, die mit einem Ablassverschluss 52 geschlossen sind. Über eine Behälterschnittstelle 54 ist die entsprechende Anordnung der Ablassbehälter 60 möglich. Nicht zuletzt ist ein Öffnungssensor 58 vorgesehen, welcher insbesondere bei einem durchzuführenden Reinigungsschritt mit einer Reinigungsvorrichtung 80 mit einer Vielzahl von Reinigungsmitteln 82 einsetzbar ist.

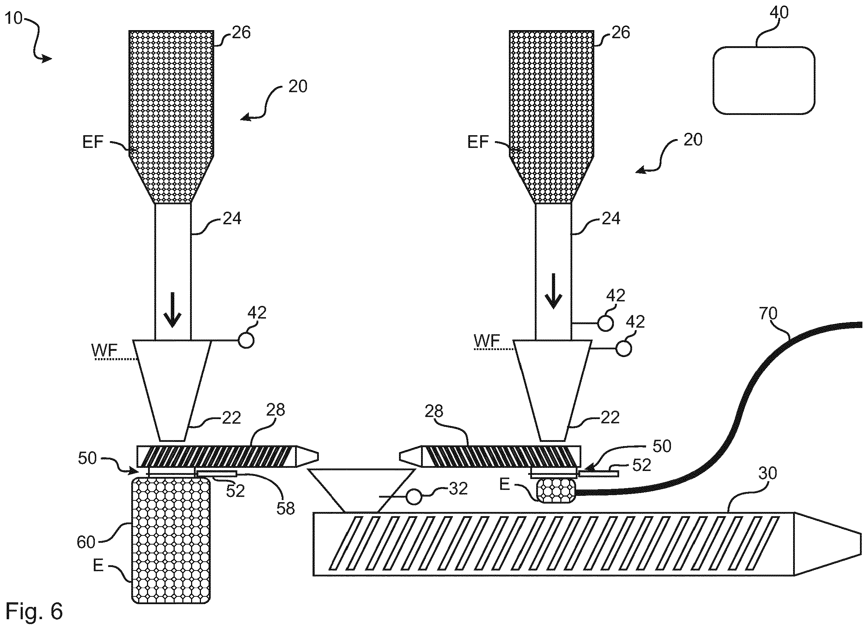

In Fig. 6 ist dargestellt, wie zu diesem Zeitpunkt ein Folgematerial EF bereits wieder in die Vorlagebehälter 26 der Vorlagevorrichtungen 20 eingefüllt werden kann, so dass nachfolgend besonders schnell und mit geringer Vermischung das Umschalten zwischen dem Einsatzmaterial F und dem Folgematerial EF erfolgen kann.

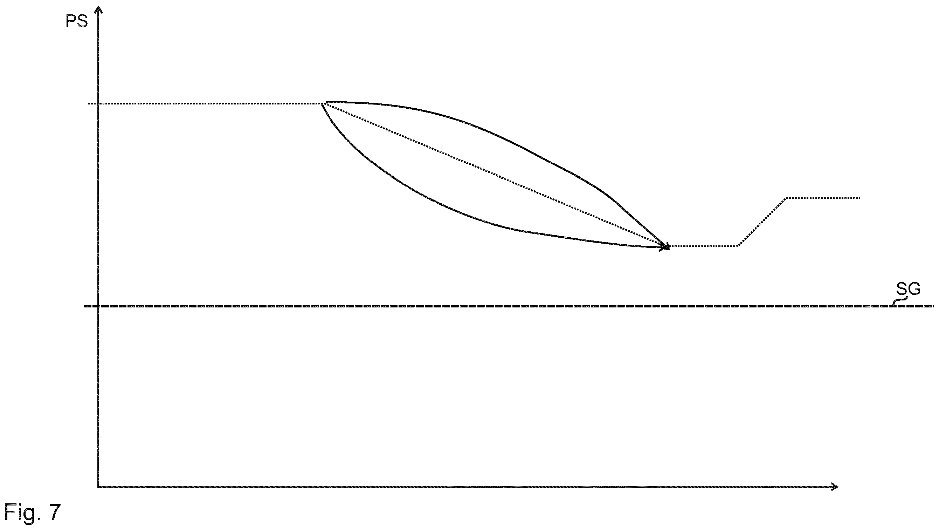

Die Fig. 7 bis 9 zeigen Möglichkeiten eines Verlaufs der Produktionsstabilität PS über die Zeit. Fig. 7 zeigt, wie anhand der gestrichelten Linie von einer hohen Produktionsstabilität PS auf eine mittlere Produktionsstabilität PS ganz rechts übergegangen werden soll. Links ist also die Situation bei Einsatzrezeptur und rechts die Situation bei Folgerezeptur gegeben. Bei diesem Verlauf ist zu erkennen, dass die Produktionsstabilität PS immer oberhalb der Stabilitätsgrenze SG verbleibt. Mit den zwei gekrümmten Darstellungen ist dargestellt, dass hier unerwünschte Gradientenverläufe bestehen, obwohl die Stabilitätsgrenze SG immer überschritten wird. Bevorzugt ist die gestrichelte Linie, anhand welcher mit im Wesentlichen gleichbleibenden und konstanten Gradienten ein linearer Übergang zwischen den einzelnen Produktionsstabilitäten PS vorgegeben wird.

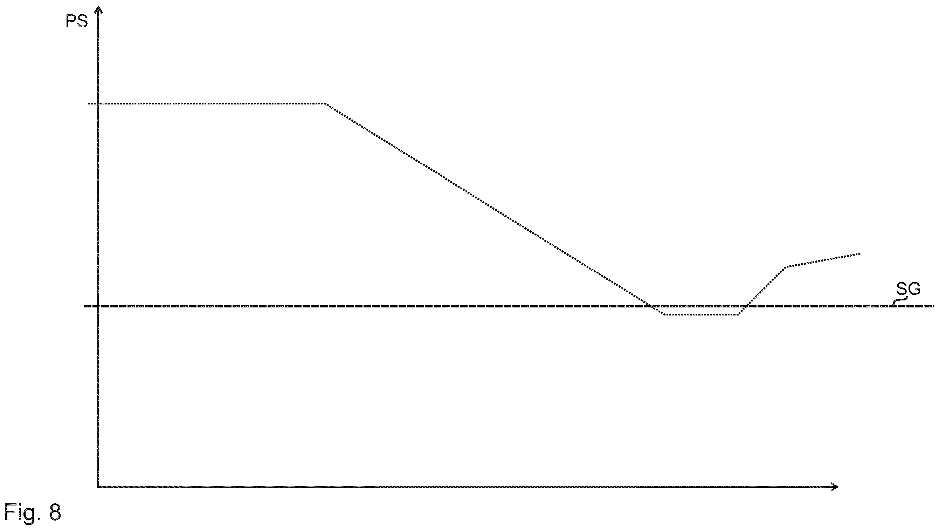

Fig. 8 zeigt eine Situation, welche unerwünscht ist und durch die Vorbestimmung der Produktionsstabilität PS vermieden wird. So ist hier im Verlauf beim Übergang zwischen den beiden Rezepturen ein Absinken der Produktionsstabilität PS unter die Stabilitätsgrenze SG gegeben, so dass dieser Weg für eine Wechselstrategie vermieden wird.

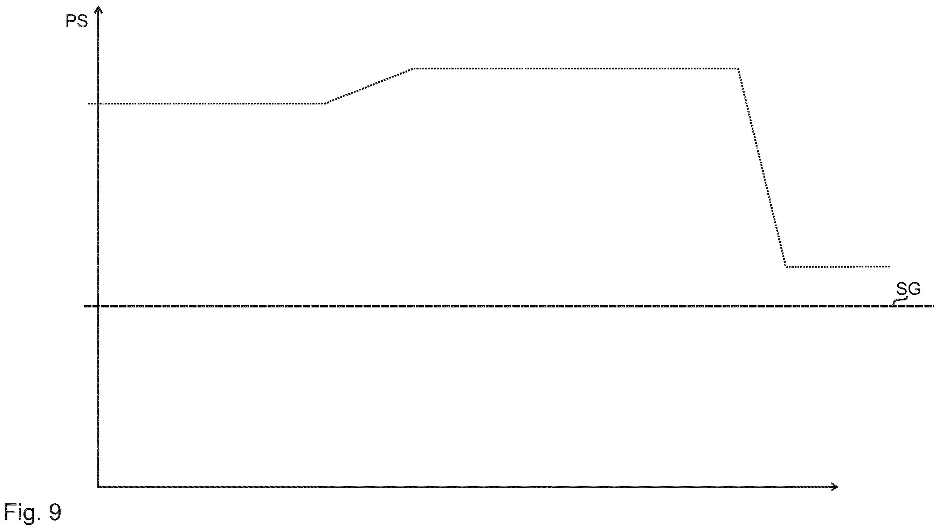

Fig. 9 zeigt eine im Wesentlichen optimierte Wechselstrategie, so dass die Produktionsstabilität PS über die größte Zeit des Wechsels zwischen den beiden Rezepturen auf einem höheren Niveau liegt als bei der Einsatzrezeptur. Erst kurz vor Ende des Materialwechsels sinkt die Produktionsstabilität PS stark ab und verbleibt dann auf dem Niveau der Folgerezeptur. Die Stabilitätsgrenze SG wird hier ebenfalls nie unterschritten.

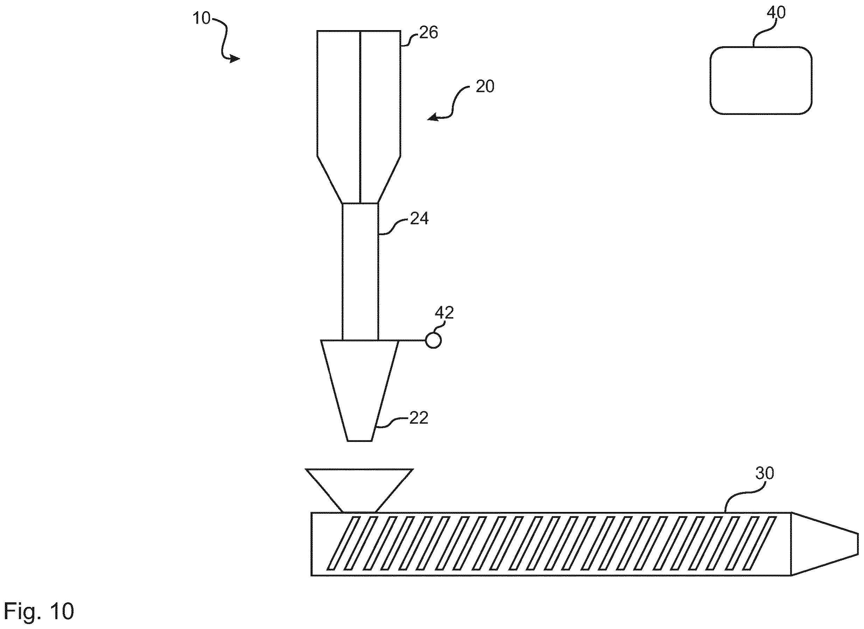

Die Fig. 10 zeigt eine alternative Ausführungsform einer Extrusionsvorrichtung 10. Diese basiert hinsichtlich der erfindungsgemäß beschriebenen Vorteile auf der Ausführungsform der Fig. 1, unterscheidet sich jedoch durch die Nachfüllfunktion. So ist hier ein sogenannter Batch-Prozess für das Nachfüllen vorgesehen. Der Vorlagebehälter 26 ist mit getrennten Volumina ausgestattet, so dass jedes Volumina des Vorlagebehälters 26 als eine Vorlagevorrichtung 20 verstanden werden kann. Darunter angeordnete Bauteile in Form des Fallrohrs 24 und des Wägetrichters 22 sind somit gemeinsame Bauteile der unterschiedlichen Vorlagevorrichtungen 20. Unterhalb des Wägetrichters 22 ist ein Mischtrichter, insbesondere mit einem Mischerantrieb, vorgesehen, welcher eine Homogenisierung vor dem Eintritt in den Extruder erlaubt.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Extrusionsvorrichtung
- 20: Vorlagevorrichtung
- 22: Wägetrichter
- 23: Trichteröffnung
- 24: Fallrohr
- 26: Vorlagebehälter
- 28: Dosierschnecke
- 30: Extruder
- 32: Notsensor
- 40: Kontrollvorrichtung
- 42: Füllstandssensor
- 50: Ablassöffnung
- 52: Ablassverschluss
- 54: Behälterschnittstelle
- 56: Sensorvorrichtung
- 58: Öffnungssensor
- 60: Ablassbehälter
- 62: Ablassvolumen
- 70: Rückführvorrichtung
- 80: Reinigungsvorrichtung
- 82: Reinigungsmittel
- 84: Staubsensor

- E: Einsatzmaterial
- EF: Folgematerial
- BF: Betriebsfüllstand
- WF: Wechselfüllstand
- F: Füllstand
- PS: Produktionsstabilität
- SG: Stabilitätsgrenzwert

## Patentansprüche

1. Verfahren für die Durchführung eines Materialwechsels bei einer Extrusionsvorrichtung (10) mit zumindest zwei Vorlagevorrichtungen (20) für die Vorlage von Einsatzmaterial (E) für einen Extruder (30), aufweisend die folgenden Schritte:
- Erkennen einer Wechselanforderung für einen Materialwechsel bei einer Extrusionsvorrichtung (10),
- Vorbestimmen einer Produktionsstabilität (PS) für einen Zeitpunkt nach dem Materialwechsel wenigstens einer Vorlagevorrichtung (20),
- Vergleich der vorbestimmten Produktionsstabilität (PS) mit einem Stabilitätsgrenzwert (SG),
- Durchführen des Materialwechsels für wenigstens eine Vorlagevorrichtung (20) in Abhängigkeit von dem Vergleichsergebnis,
wobei für den gesamten Materialwechsel für alle Vorlagevorrichtungen (20) der Gradient der Produktionsstabilität (PS) vorbestimmt und für die Durchführung des Materialwechsels berücksichtigt wird,
**dadurch gekennzeichnet,**
**dass** der Schritt des Durchführens des Materialwechsels ausgeführt wird, solange wenigstens eine stabile und/oder stabilisierende Schicht einer Folie die Vorbestimmung einer Produktionsstabilität (PS) über dem Stabilitätsgrenzwert (SG) ergibt.

2. Verfahren nach Anspruch 1,
**dadurch gekennzeichnet,**
**dass** für den Schritt der Vorbestimmung der Produktionsstabilität (PS) der Einfluss auf die Produktionsstabilität (PS) für das Einsatzmaterial (E) und ein Folgematerial (EF) aus einer Datenbank ausgelesen werden.

3. Verfahren nach einem der vorangegangenen Ansprüche,
**dadurch gekennzeichnet,**
**dass** für den Schritt der Vorbestimmung der Produktionsstabilität (PS) die Korrelation der Vorlagevorrichtung (20) mit einer zugehörigen Schicht der zu produzierenden Folie in Betracht gezogen wird.

4. Verfahren nach einem der vorangegangenen Ansprüche,
**dadurch gekennzeichnet,**
**dass** die Produktionsstabilität (PS) für eine mehrschichtige Folie simuliert wird, insbesondere zumindest zwei, vorzugsweise alle unterschiedlichen Reihenfolgen der Vorlagevorrichtungen (20) bei der Durchführung des Materialwechsels hinsichtlich der zu erwartenden Produktionsstabilität (PS) simuliert werden.

5. Verfahren nach einem der vorangegangenen Ansprüche,
**dadurch gekennzeichnet,**
**dass** die Schritte der Vorbestimmung und des Vergleichs für alle Vorlagevorrichtungen (20) durchgeführt werden und anschließend eine Reihenfolge der Vorlagevorrichtungen (20) für die Durchführung des Materialwechsels vorgegeben wird.

6. Verfahren nach einem der vorangegangenen Ansprüche,
**dadurch gekennzeichnet,**
**dass** während und/oder nach der Durchführung eines Materialwechsels für wenigstens eine Vorlagevorrichtung (20) die reale Produktionsstabilität (PS) überwacht und aufgezeichnet wird.

7. Verfahren nach einem der vorangegangenen Ansprüche,
**dadurch gekennzeichnet,**
**dass** die Schritte der Vorbestimmung und des Vergleichs für einen manuellen Vorschlag einer Reihenfolge durchgeführt werden.

8. Verfahren nach einem der vorangegangenen Ansprüche,
**dadurch gekennzeichnet,**
**dass** in Abhängigkeit von dem Vergleichsergebnis während der Durchführung des Materialwechsels für wenigstens eine Vorlagevorrichtung (20) zumindest ein Produktionsparameter angepasst wird, insbesondere wenigstens einer der folgenden:
- Temperatur des Extruders (30)
- Foliendicke
- Geschwindigkeit der Produktion
- Extruderausstoß
- Aufblasverhältnis

9. Verfahren nach einem der vorangegangenen Ansprüche,
**dadurch gekennzeichnet,**
**dass** zusätzlich für jedes zu wechselnde Einsatzmaterial (E) eine Spülzeit bestimmt wird und bei der Auswahl der Reihenfolge der Vorlagevorrichtungen (20) berücksichtigt wird.

10. Verfahren nach einem der vorangegangenen Ansprüche,
**dadurch gekennzeichnet,**
**dass** die Schritte der Vorbestimmung und des Vergleichs während der Durchführung des Materialwechsels wiederholt, insbesondere kontinuierlich ausgeführt werden.

## Claims

1. A method for carrying out a change of material in an extrusion device (10) having at least two feed devices (20) for feeding a feed material (E) to an extruder (30) having the following steps:
- identifying a change request for a change of material in an extrusion device (10)
- predetermining a production stability (PS) for a point in time after the material of at least one feed device (20) has been changed,
- comparing the predetermined production stability (PS) with a stability limit value (SG),
- carrying out the change of material for at least one feed unit (20) depending on the result of the comparison,
wherein the gradient of the production stability (PS) is predetermined for the entire change of material for all feed devices (20)
**characterized in**
**that** the step of carrying out the change of material is performed as long as at least one stable and/or stabilizing layer of a film results in the predetermination of a production stability (PS) above the stability limit value (SG).

2. The method according to claim 1,
**characterized in**
**that** for the step of pre-determining the production stability (PS) the influence on the production stability (PS) for the feed material (E) and a subsequent material (EF) are read out from a database.

3. The method according to any one of the preceding claims,
**characterized in**
**that** for the step of pre-determining the production stability (PS), the correlation of the feed device (20) with an associated layer of the film to be produced is taken into consideration.

4. The method according to any one of the preceding claims,
**characterized in**
**that** the production stability (PS) for a multilayer film is simulated, in particular at least two, preferably all different orders of the feed devices (20) are simulated when carrying out the change of material with respect to the expected production stability (PS).

5. The method according to any one of the preceding claims,
**characterized in**
**that** the steps of the pre-determination and the comparison are carried out for all feed devices (20) and subsequently an order of the feed devices (20) is specified for carrying out the change of material.

6. The method according to any one of the preceding claims,
**characterized in**
**that** during and/or after carrying out a change of material for at least one feed device (20) the real production stability (PS) is monitored and recorded.

7. The method according to any one of the preceding claims,
**characterized in**
**that** the steps of the pre-determination and the comparison are carried out for a manual proposal of an order.

8. The method according to any one of the preceding claims,
**characterized in**
**that** depending on the comparison result during the carrying out of the change of material for at least one feed device (20) at least one production parameter is adapted, in particular at least one of the following:
- temperature of the extruder (30)
- film thickness
- speed of production
- extruder output
- blow-up ratio

9. The method according to any one of the preceding claims,
**characterized in**
**that** a rinsing time is additionally determined for each feed material (E) to be changed and is taken into account in the selection of the order of the feed devices (20).

10. The method according to any one of the preceding claims,
**characterized in**
**that** the steps of the pre-determination and the comparison are repeated, in particular are performed continuously, during the carrying out of the change of material.

## Revendications

1. Procédé pour la réalisation d'un changement de matériau dans un dispositif d'extrusion (10) avec au moins deux dispositifs de présentation (20) pour la présentation d'une charge (E) pour une extrudeuse (30), comprenant les étapes suivantes :
- détection d'une demande de changement pour un changement de matériau dans un dispositif d'extrusion (10),
- prédétermination d'une stabilité de production (PS) pour un moment après le changement de matériau d'au moins un dispositif de présentation (20),
- comparaison de la stabilité de production (PS) prédéterminée avec une valeur limite de stabilité (SG),
- réalisation du changement de matériau pour au moins un dispositif de présentation (20) en fonction du résultat de la comparaison,
dans lequel, pour tout le changement de matériau pour tous les dispositifs de présentation (20), le gradient de stabilité de production (PS) est prédéterminé et pris en compte pour la réalisation du changement de matériau,
**caractérisé en ce que**
l'étape de réalisation du changement de matériau est exécutée tant qu'au moins une couche stable et/ou stabilisante d'un film donne la prédétermination d'une stabilité de production (PS) au-dessus de la valeur limite de stabilité (SG).

2. Procédé selon la revendication 1,
**caractérisé en ce que**
pour l'étape de prédétermination de la stabilité de production (PS), l'influence sur la stabilité de production (PS) pour la charge (E) et un matériau suivant (EF) sont lus dans une base de données.

3. Procédé selon l'une des revendications précédentes,
**caractérisé en ce que**
pour l'étape de prédétermination de la stabilité de production (PS), la corrélation du dispositif de présentation (20) avec une couche correspondante du film à produire est prise en compte.

4. Procédé selon l'une des revendications précédentes,
**caractérisé en ce que**
la stabilité de production (PS) est simulée pour un film multicouche, plus particulièrement deux, de préférence tous les ordres différents des dispositifs de présentation (20) lors de la réalisation du changement de matériau sont simulés en ce qui concerne la stabilité de production (PS) prévue.

5. Procédé selon l'une des revendications précédentes,
**caractérisé en ce que**
les étapes de prédétermination et de comparaison sont exécutées pour tous les dispositifs de présentation (20) puis un ordre des dispositifs de présentation (20) pour la réalisation du changement de matériau est prédéterminé.

6. Procédé selon l'une des revendications précédentes,
**caractérisé en ce que**
pendant et/ou après la réalisation d'un changement de matériau, pour au moins un dispositif de présentation (20), la stabilité de production réelle (PS) est surveillée et enregistrée.

7. Procédé selon l'une des revendications précédentes,
**caractérisé en ce que**
les étapes de prédétermination et de comparaison pour une proposition manuelle d'un ordre sont exécutées.

8. Procédé selon l'une des revendications précédentes,
**caractérisé en ce que**
en fonction du résultat de comparaison, pendant la réalisation du changement de matériau pour au moins un dispositif de présentation (20), au moins un paramètre de production est adapté, plus particulièrement au moins un des paramètres suivants :
- température de l'extrudeuse (30),
- épaisseur du film
- vitesse de production
- sortie de l'extrudeuse
- taux de soufflage.

9. Procédé selon l'une des revendications précédentes,
**caractérisé en ce que**
en outre, pour chaque charge (E) à changer, un temps de rinçage est déterminé et pris en compte lors du choix de l'ordre des dispositifs de présentation (20).

10. Procédé selon l'une des revendications précédentes,
**caractérisé en ce que**
les étapes de prédétermination et de comparaison sont répétées pendant la réalisation du changement de matériau, plus particulièrement elles sont exécutées en continu.
